# EUROPEAN PATENT SPECIFICATION

(11) **EP 1 674 242 B1**
(45) Date of publication and mention of the grant of the patent: **13.02.2008**
(21) Application number: 04090514.3
(22) Date of filing: 23.12.2004
(51) Int. Cl.: B29C 65/08, B60R 13/02, F02B 77/13

(54) **Fibrous mat fixing structure**
Struktur zur Befestigung einer faserigen Matte
Structure de fixation de tapis fibreux

(43) Date of publication of application: 28.06.2006
(73) Proprietor: Kasai Kogyo Co., Ltd., Kanagawa-ken (JP)
(72) Inventor: Sasaki, Kei, c/o Kasai Kogyo Co. Ltd., Kouza-gun, Kanagawa-ken (JP)
(74) Representative: Hengelhaupt, Jürgen

(56) References cited:
- DE-A1- 4 206 583
- US-A- 5 354 392
- PATENT ABSTRACTS OF JAPAN vol. 1999, no. 04, 30 April 1999 (1999-04-30) & JP 11 005267 A (TOYODA GOSEI CO LTD), 12 January 1999 (1999-01-12)

## Description

### BACKGROUND OF THE INVENTION

### Field of the Invention

The present invention relates to a fibrous mat fixing structure and, more particularly, to a fibrous mat fixing structure capable of obtaining high bonding strength by welding in a short time when a fibrous mat is integrally attached by ultrasonic welding to a resin molding formed of a thermoplastic resin.

### Description of the Related Art

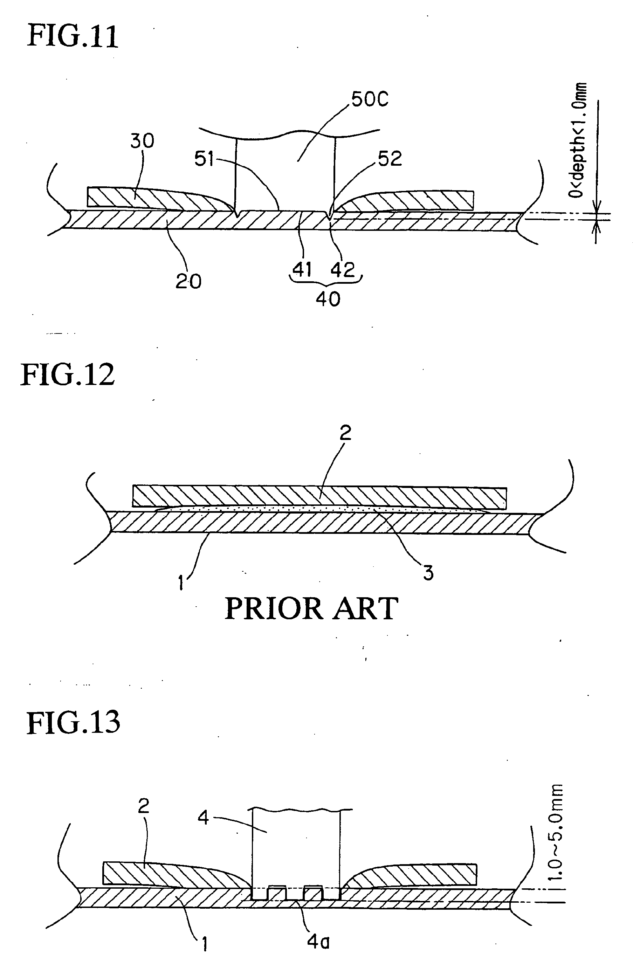

Interior trims comprising formed of resin moldings are ordinarily attached to interior side surfaces of vehicle molding panels by attachment means such as clips. A sound absorbing member is fixed on surfaces of such interior trims on the vehicle molding panel side to improve the quietness in the occupant compartment. For example, as shown in FIG. 12, a sound absorbing member 2 is fixed to the back surface of an interior trim 1 for a vehicle by bonding using an adhesive 3 to reduce the amount of noise propagating from the outside of the vehicle to the interior thereof, thereby improving the quietness in the compartment.

As interior trim 1, an injection molded member or a molded pressed molding formed of a thermoplastic resin such as a polypropylene (PPP) resin, a polyethylene (PE) resin or an ABS resin is used. As sound absorbing member 2, a fibrous mat such as a mat of felt or non-woven fabric is used.

A structure in which a sound absorbing member 2 such as a fibrous mat is fixed by ultrasonic welding is now attracting attention because it is capable of preventing worsening of a working environment due to use of an adhesive while facilitating recycling.

DE 42 06 583 A1 discloses a method and device for connecting two thermoplastic components using ultrasound. The ultrasound is supplied to the components to be connected via a sonotrode, where the sonotrode and the components are movable with respect to each other. The tip of the sonotrode is immerged into the components while forming the connection.

Details of a method of ultrasonic welding are disclosed in Japanese Patent Laid-Open No. 11-5267. This method will be outlined with reference to FIG. 13. A sound absorbing member 2 such as a fibrous mat is set on a vehicle molding panel side of an interior trim 1 constituted by a synthetic resin formed member, an ultrasonic horn 4 is pressed against the sound absorbing member 2 in the direction of the interior trim 1 with a predetermined pressing force, and ultrasonic vibrations are applied from the ultrasonic horn 4 to weld portions of the interior trim 1 and the sound absorbing member 2 so that the interior trim 1 and the sound absorbing member 2 are integrally attached to each other. The pressing surface of the ultrasonic horn 4 is worked so as to have a recessed/projecting surface 4a having recesses and projections, such that the boundary area there between is large, as shown in FIG. 13.

In the case of use of the structure in which the sound absorbing member 2 is welded to the interior trim 1 by ultrasonic welding using the ultrasonic horn 4 having the recessed/projecting surface 4a as a pressing surface, it is necessary to perform ultrasonic working by applying such a large pressing force to the ultrasonic horn 4 that a multiplicity of recesses to a depth of 1 to 5 mm are formed in the boundary surface of the interior trim 1 and, therefore, the capacity of the cylinder of the pressing machine for applying the pressing force to the ultrasonic horn 4 is increased and the working time is also increased, resulting in an increase in facility cost and an increase in operation time. This is a major cause of a reduction in productivity. Further, another drawback of increasing the possibility of occurrence of a defect in appearance such as sinkmark or an irregularity defect in the interior trim 1 product surface to cause a degradation in terms of appearance design in the situation where the formation of deep recesses in the welded portion is required has also been pointed out.

### SUMMARY OF THE INVENTION

In view of the above-described circumstances, an object of the present invention is to provide a fibrous mat fixing structure suitable for a sound absorbing member for vehicles for example, i.e., a fibrous mat fixing structure in which a fibrous mat such as a mat of non-woven fabric having a high sound absorbing effect is integrally attached by ultrasonic welding to a surface of a thermoplastic resin plate facing a panel, which is capable of welding with a low pressing force in a shorter working time such that use of simpler facilities is enabled and high productivity is ensured, and which is capable of maintaining a good appearance.

The inventors of the present invention achieved the present invention by noticing that, if a certain conf iguration of a pressing surface of an ultrasonic horn is devised, an anchoring effect can be expected such that fibers in a fibrous mat bite into a molten surface of a synthetic resin plate, as well as the melting effect of ultrasonic working.

That is, the present invention provides a fibrous mat fixing structure in which a fibrous mat is attached to a panel-facing surface of a resin molding installed to an interior side of a vehicle molding panel, and welding using an ultrasonic horn is performed at each of predetermined spots to fix the fibrous mat to the resin molding, the fibrous mat fixing structure including a flat weld surface and a V-groove forming a weld portion in the fibrous mat, a flat pressing surface of the ultrasonic horn being pressed against the flat weld surface, a sharp projecting thread formed on the pressing surface of the ultrasonic horn being used to cause fibers in the fibrous mat to bite into the resin molding.

As the material of the synthetic resin plate, any of thermoplastic resins including a PP resin, a PE resin and an ABS resin can be used. The synthetic resin plate can be formed into a desired shape by injection molding, mold press forming, or the like. As the fibrous mat, a material in which fibers are collected in the form of a mat, e.g., a mat of non-woven fabric or a mat of felt can be used. As the fibers for the fibrous mat, fibers may suffice in which synthetic fibers such as PP fibers, PR fibers or polyester fibers, natural fibers or the like are used as base fibers, and which are weldable by ultrasonic welding, that is, low-melting-point fibers are mixed as partial binder fibers. It is preferred that the binder fibers be fibers of a resin in the same family as that for synthetic resin formed member, because compatibility between the resins can be expected.

Theweld portion in which the resinmolding and the fibrous mat are welded is formed by a flat weld surface in which the boundary surface is molten and integrally attached by pressing with the ultrasonic horn, and a V-groove biting from the flat weld surface into the resin molding. The V-groove may be set in any pattern such as a crisscross pattern, a radial pattern, a frame pattern or a lattice pattern. The depth of the V-groove is set to 1 mm, more preferable a value in the range from 0.3 to 0.8 mm.

Accordingly, the ultrasonic horn used have a sharp projecting thread formed on the flat pressing surface to form the flat weld surface and the V-groove in the weld portion in which the resin molding and the fibrous mat are welded to each other. The V-groove is formed by using the projecting thread. As conditions for working with the ultrasonic horn, a pressing force of 0.5 to 0.6 MPa, a working time of 0.1 to 0.5 sec and a frequency of 28 to 40 kHz are preferred.

In the fibrous mat fixing structure in accordance with the present invention, the fibrous mat is welded and integrally attached to the resin molding by means of the flat weld surface and the V-groove provided as the weld portion when the fibrous mat is integrally combined by ultrasonic working, so that the V-groove can be easily formed with the sharp projecting thread formed on the pressing surface of the horn even if the pressing force is small and drive with a small-capacity cylinder suffices for pressing. Also, the effect of anchoring in the V-groove based on a phenomenon in which the fibers of the fibrous mat bite into the molten surface of the resin molding can be expected as well as the melding effect of ultrasonic welding. An improved bonding strength can be obtained from the strength of ultrasonic welding and the bonding strength based on the anchoring effect. Moreover, the amount of melt of the resin molding is limited to prevent occurrence of any considerable sinkmark, an irregularity defect or the like in the finished surface of the resin molding.

In the fibrous mat fixing structure in accordance with the present invention, as described above, the resin molding and the fibrous mat are welded and integrally attached to each other in the weld portion thereof by using the flat pressing surface of the ultrasonic horn, and a V-groove is formed in the flat weld surface by the sharp projecting thread formed on the pressing surface of the horn to forcibly cause the fibers of the fibrous mat to bite into the molten portion of the resin molding. A resulting anchoring member can be expected and an improved bonding strength can be obtained even by short-time welding.

Therefore, a lower pressing force applied to the ultrasonic force may suffice; a compact air cylinder can be used as a pressing machine for applying the pressing force to the ultrasonic horn; the facilities can be simplified; the welding time can be reduced to achieve an improvement in operability; and the external appearance of the product can be improved.

### BRIEF DESCRIPTION OF THE DRAWINGS

FIG 1 is a perspective view of a luggage room side trim using a fibrous mat fixing structure in accordance with the present invention seen from the back surface side;
FIG. 2 is a front view of a non-woven fabric mat attached to the luggage room side trim shown in FIG. 1;
FIG. 3 is a cross-sectional view taken along line III-III in FIG. 2;
FIGS. 4(a) and 4(b) are a front view and a view seen in the direction of arrow A, respectively, of a first embodiment of an ultrasonic horn used for the fibrous mat fixing structure in accordance with the present invention;
FIG. 5 is a diagram showing the formation of a weld portion in the non-woven fabric mat using the ultrasonic horn shown in FIGS. 4(a) and 4(b);
FIGS. 6(a) and 6(b) are a front view, and a view seen in the direction of arrow B in FIG. 6(a), respectively, of a modification of the ultrasonic horn used in a first embodiment of the fibrous mat fixing structure in accordance with the present invention;
FIG. 7 is a diagram showing the formation of a weld portion in the non-woven fabric mat using the ultrasonic horn shown in FIGS. 6(a) and 6(b);
FIGS. 8(a) and 8(b) are a front view and a view seen in the direction of arrow C in FIG. 8(a), respectively, of a further modification of the ultrasonic horn used in the first embodiment of the fibrous mat fixing structure in accordance with the present invention;
FIG. 9 is a diagram showing the formation of a weld portion in the non-woven fabric mat using the ultrasonic horn shown in FIGS. 8(a) and 8(b);
FIGS. 10(a) and 10(b) are a front view and a view seen in the direction of arrow D in FIG. 10(a), respectively, of the construction of the ultrasonic horn used in a second embodiment of the fibrous mat fixing structure in accordance with the present invention;
FIG. 11 is a diagram showing the formation of a weld portion in the non-woven fabric mat using the ultrasonic horn shown in FIGS. 10(a) and 10(b);
FIG. 12 is a diagram showing an example of the conventional art in which a sound absorbing member is fixed to a resin molding by bonding using an adhesive; and
FIG. 13 is a diagram showing an example of the conventional art in which a non-woven fabric mat is fixed to a resin molding by ultrasonic welding.

### DETAILED DESCRIPTION OF THE PREFERRED EMBODIMENTS

Embodiments of a fibrous mat fixing structure in accordance with the present invention will be described in detail with reference to the accompanying drawings.

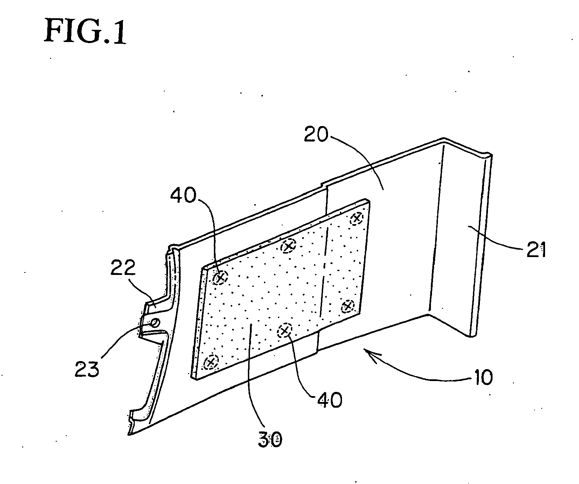

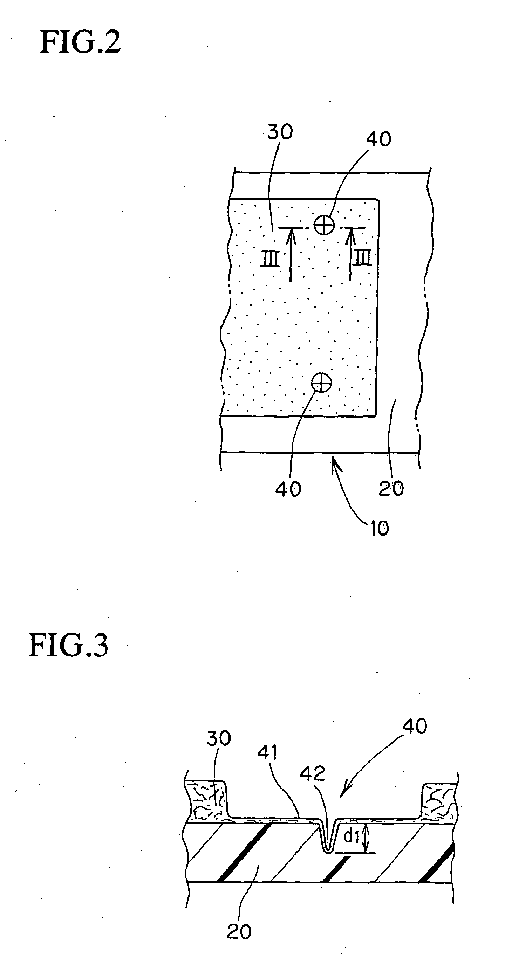

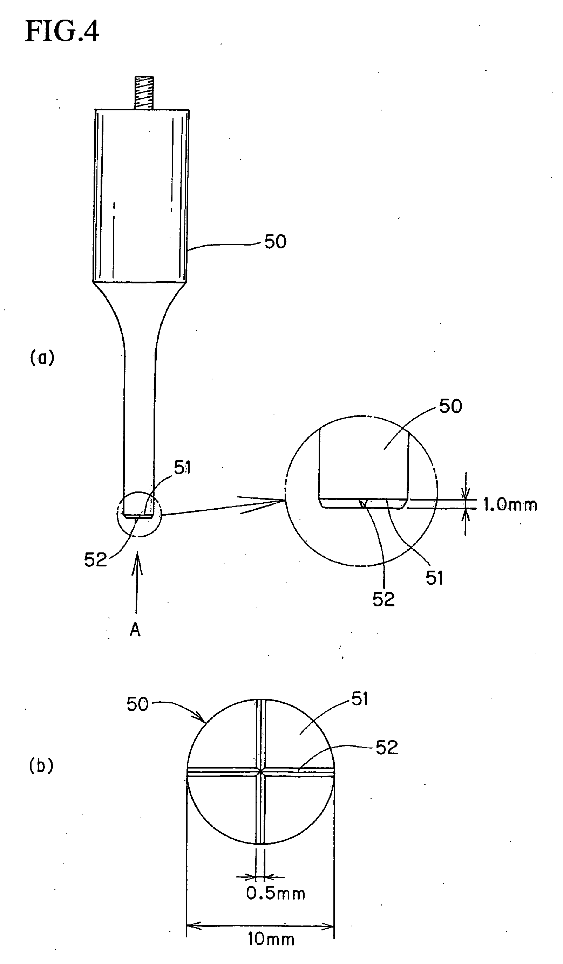

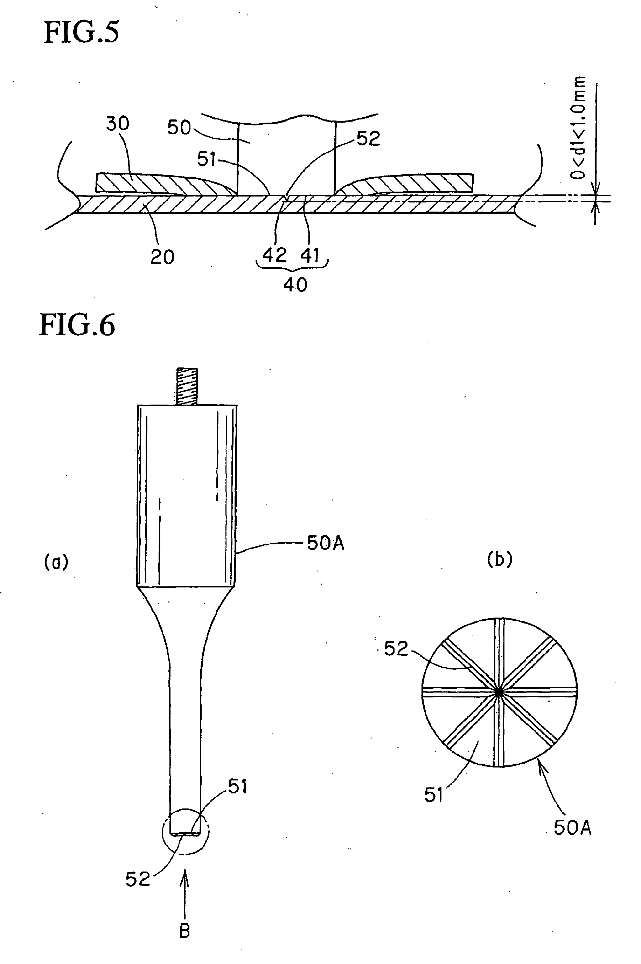

FIGS. 1 to 5 show a first embodiment of the present invention. FIG 1 is a perspective view of a luggage room side trim seen from the back surface side, with a non-woven fabric mat attached to the back surface of the trim. FIG. 2 is a front view of the non-woven fabric mat attached to the luggage room side trim body. FIG. 3 is a cross-sectional view of a weld portion of the non-woven fabric mat. FIGS. 4(a) and 4 (b) show the shape of an ultrasonic horn used in the first embodiment. FIG. 4(a) is a front view of the ultrasonic horn, and FIG. 4(b) is a view seen in the direction of arrow A in FIG. 4(a). FIG. 5 is a cross-sectional view showing a fibrous mat welding step using the ultrasonic horn shown in FIGS. 4(a) and 4(b). FIGS. 6 to 9 are diagrams showing examples of modifications of the first embodiment.

Referring to FIG. 1, a luggage room side trim 10 is attached to a surface of a side wall panel on the interior side in a luggage room of a vehicle. The luggage room side trim 10 is constituted mainly by a luggage room side trim body 20 formed of a resin molding made of a thermoplastic resin and a non-woven fabric mat 30 attached the back surface of the luggage room side trim body 20 (facing a vehicle molding panel). More specifically, the luggage room side trim main molding 20 is constituted by a PP resin injection molded member and has a vertical wall flange 21 formed at one end and an attachment lug 22 formed at the other end for attachment to the vehicle molding panel. A screw hole 23 is formed in the attachment lug 22.

The non-woven fabric mat 30 having mainly a sound absorbing function is attached to the back surface of the luggage room side trim main molding 20. A feature of the present invention resides in a fixing structure in which the non-woven fabric mat 30 is fixed to the luggage room side trim main molding 20. That is, the non-woven fabric mat 30 has an external shape slightly smaller than the external shape of the luggage room side trim main molding 20 and is firmly fixed to the luggage room side trim main molding 20 by a plurality of weld portions 40 (six weld portions 40 in the embodiment), as shown in FIG. 2.

FIG. 3 shows the structure as seen in section at one weld portion 40 of the non-woven fabric mat 30. On the back surface of the luggage room side trim main molding 20 in the form of a plate having a thickness of 2.0 to 3 mm, the weld portion 40 of the non-woven fabric mat 30 is formed by a generally circular flat weld surface 41 and V-grooves 42 in a crisscross configuration biting from the flat weld surface 41 into the luggage room side trim main molding 20. The depth (indicated by d1 in FIG. 3) of the V-grooves 42 is set to 1 mm or less. In this embodiment, a mixed non-woven fabric in which high-melting-point polyester fibers and PP fibers are mixed is used as the non-woven fabric mat 30. At the flat weld surface 41 in the weld portion 40, a resin surface portion of the luggage room side trim main molding 20 is partially molten by ultrasonic working using an ultrasonic horn 50 described below and part of the PP fibers, which are low-melting-point fibers in the non-woven fabric mat 30, are also molten by ultrasonic working. By welding therebetween and compatibility between the two resins, the luggage room side trim main molding 20 and the non-woven fabric mat 30 are welded and integrally attached to each other in the flat weld surface 41.

In the boundary surface between the luggage room side trim main molding 20 and the non-woven fabric mat 30 in the above-described V-grooves 42, the resin in the luggage room side trim main molding 20 and the PP fibers in the non-woven fabric mat 30 are molten to be welded to each other and the base fibers (high-melting-point polyester fibers) in the non-woven fabric mat 30 in particular bite into the molten surface of the luggage room side trim main molding 20. An anchoring effect of the fibers biting into the luggage room side trim main molding 20 can be expected. In this way, a high strength of bonding can be obtained between the non-woven fabric mat 30 and the luggage room side trim main body 20 at the boundary in the V-grooves 42.

FIGS. 4(a) and 4(b) are diagrams showing the structure of the ultrasonic horn 50 used for welding the non-woven fabric mat 30, and FIG. 5 is a diagram showing an essential portion of the weld structure using the ultrasonic horn 50. The ultrasonic horn 50 has a flat circular pressing surface 51 at its tip. The diameter of the pressing surface 51 is set to 10 mm. Further, sharp projecting threads 52 are formed in a crisscross configuration on the flat pressing surface 51. The width and height of the projecting threads 52 are set to 0.5 mm and 1.0 mm, respectively.

The non-woven fabric mat 30 is welded to the back surface of the luggage room side trim main molding 20 by performing ultrasonic welding using the ultrasonic horn 50 having the flat pressing surface 51 and the sharp projecting threads 52, and by setting the following conditions: a pressing force of 0.5 to 0.6 MPa applied to the ultrasonic horn 50; a working time of 0.1 to 0.5 sec, and a frequency of 28 to 40 kHz, as shown in FIG. 5. The structure of the weld portion 40 shown in FIG. 3 is thereby obtained.

That is, since the non-woven fabric mat 30 is fixed by welding using the above-described ultrasonic horn 50, the need for use of a device such as an applicator specially for a hot-melt adhesive in the conventional structure using an adhesive is eliminated and fixing in accordance with the present invention is preferable in terms of working environment and is also advantageous in terms of recycling.

In comparison with the horn pressing surface in the conventional art set in a complicated recessed/projecting configuration, the sharp projecting threads 52 can bite easily into the pressed surface of the luggage room side trim main molding 20, so that any considerable sinkmark, an irregularity defect or the like does not occur in the surface of the luggage room side trim main molding 20 and a good appearance of the product surface can be ensured. In particular, a high bonding strength can be obtained even if the pressing force applied to the ultrasonic horn 50 is small. Therefore a compact air cylinder can be used as a pressing machine for applying the pressing force to the ultrasonic horn 50 and the working time is reduced, thus contributing to a reduction in operation time and an increase in productivity. While in this embodiment a non-woven fabric mat 30 using as base fibers a mixed non-woven fabric in which high-melting-point polyester fibers and PP fibers are mixed, synthetic fibers other than high-melting-point polyester fibers or natural fibers may alternatively used as base fibers if binder fibers are contained as part of the base fibers. Also, felt in which binder fibers are mixed may be used.

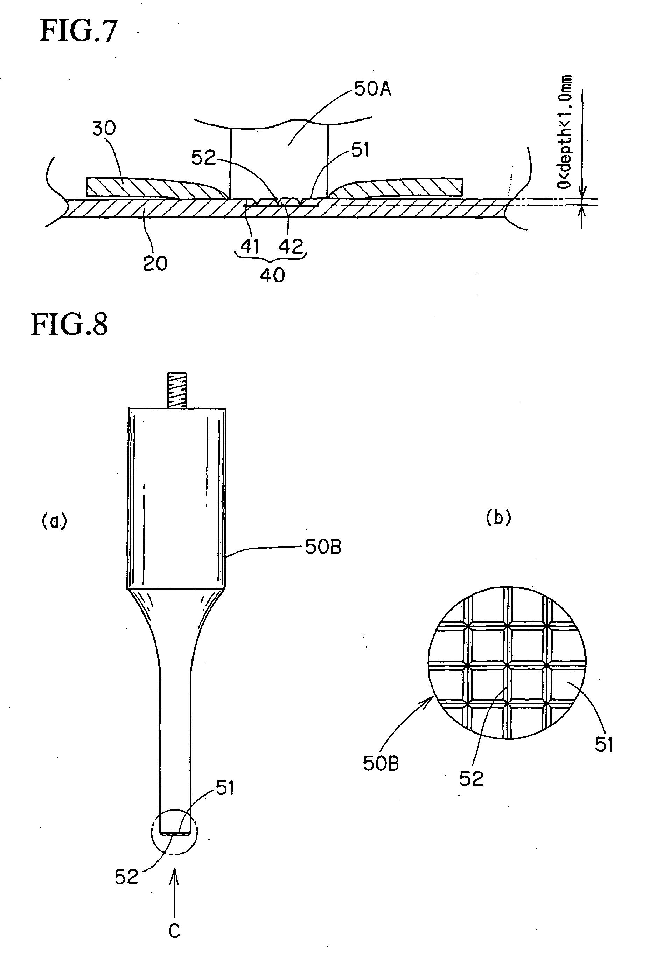

FIGS. 6 to 9 show modifications of the first embodiment. FIGS. 6(a) and 6(b) are diagrams showing the construction of an ultrasonic horn changed in configuration, and FIG. 7 is a diagram showing the formation of a weld portion 40 using the ultrasonic horn.

FIG. 6(a) is a front view of an ultrasonic horn 50A, and FIG. 6(b) is a view seen in the direction of arrow B in FIG. 6(a). The ultrasonic horn 50A has a flat circular pressing surface 51 at its tip, and projecting threads 52 are formed on the pressing surface 51 so as to extending radially in eight directions from a center of the pressing surface 51. The width and height of these projecting threads 52 are set to 0.5 mm and 1.0 mm, respectively, as in the above-described embodiment. In the case of welding and fixing the non-woven fabric mat 30 to the luggage room side trim main molding 20 by using the ultrasonic horn 50A shown in FIGS. 6(a) and 6(b), the advantage of increasing the strength of welding of the non-woven fabric mat 30 can be obtained as shown in FIG. 7 since the thread 52 setting area is increased relative to that in the above-described embodiment (crisscross configuration).

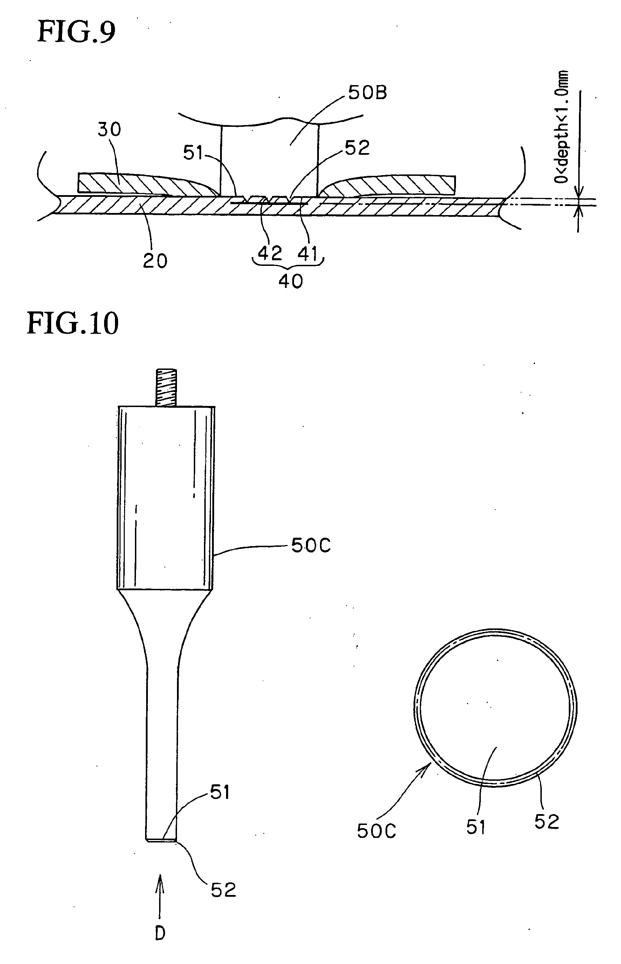

Further, FIGS. 8(a) and 8(b) are diagrams showing a modification of the pressing surface configuration of the ultrasonic horn 50B. FIG. 8(a) is a front view of the ultrasonic horn 50A, and FIG. 8(b) is a view seen in the direction of arrow C in FIG. 8(a). FIG. 9 is a diagram showing the formation of a weld portion 40 using the ultrasonic horn 50B. That is, in the ultrasonic horn 50B shown in FIGS. 8(a) and 8(b), sharp projecting threads 52 are formed on the flat pressing surface 51 so as to extend in a plurality of rows. Also in the case of setting projecting threads in such a lattice configuration, the proportion of V-grooves 42 in the weld portion 40 is increased to advantageously increase the strength of welding of the non-woven fabric mat 30.

Thus, in the ultrasonic horn 50, 50A or 50B used in the first embodiment, projecting threads 52 in a crisscross, radial or lattice configuration are formed on the flat pressing surface 51 and V-grooves 42 corresponding to the projecting thread 52 pattern on the ultrasonic horn 50, 50A or 50B are formed in the weld portion 40 in which the luggage room side trimmainmolding 20 and the non-woven fabric mat 30 are bonded, thereby increasing the welding strength. While in the above-described embodiment the ultrasonic horns 50, 50A and 50B having circuit pressing surfaces 51 are used, the shape of the pressing surface 51 may be an elliptical or rectangular.

FIGS. 10 and 11 show a second embodiment of the present invention. FIGS. 10(a) and 10(b) are diagrams showing an ultrasonic horn 50C having a modified horn shape. FIG. 10(a) is a front view of the ultrasonic horn 50C, and FIG. 10(b) is a view seen in the direction of arrow D in FIG. 10(a). FIG. 11 is a diagram showing the formation of a weld portion of a non-woven fabric mat using the ultrasonic horn shown in FIGS. 10(a) and 10(b). The ultrasonic horn 50C shown in FIGS. 10(a) and 10(b) has a sharp projecting thread 52 formed on the horn tip flat pressing surface 51 along the circumferential edge of the pressing surface 51. The ultrasonic horn 50C in the second embodiment is formed so as to have the projecting thread 52 formed on the horn tip flat pressing surface 51 along the circumferential edge of the same and can therefore be worked only with a lathe, while it is necessary to use a numerically controlled lathe in the first embodiment. Therefore the manufacturing cost of the ultrasonic horn 50C can be reduced.

Also in the case of use of the ultrasonic horn 50C, the projecting thread 52 along the circumferential edge of the flat pressing surface 51 bites into the luggage room side trim main molding 20, as shown in FIG. 11, if the ultrasonic horn 50C is pressed against the weld portion 40 when the non-woven fabric mat 30 is bonded to the back surface of the luggage room side trim main molding 20 by ultrasonic working. Welding in the flat weld surface 41 and the effect of anchoring in the V-groove 42 can also be expected. Therefore, an increased strength of bonding in the weld portion 40 equivalent to that in the first embodiment can be expected. Also, the working time can be reduced in ultrasonic working and a smaller pressing machine can be used for ultrasonic working.

The luggage room side trim 10 having the non-woven fabric mat 30 attached to the back surface of the luggage room side trimmain molding 20 to improve the sound absorbing performance has been described in the description of the first and second embodiments. However, the present invention can be applied to any sound absorbing components in a vehicle occupant compartment or an engine room as well as in a luggage room and can also be applied to any fibrous mat attached to the back surface of a resin panel.

The pressing surface 51 of the ultrasonic horn 50 used in the fibrous mat fixing structure in accordance with the present invention may alternatively have any of an elliptical shape, a rectangular shape, etc., other than a circular shape. Also, the weld portion 40 and the V-groove 42 pattern may be selected from any other shapes and patterns.

## Claims

1. A fibrous mat fixing structure in which a fibrous mat (30) is attached to a panel-facing surface of a resin molding (20) installed to an interior side of a vehicle molding panel, and welding using an ultrasonic horn (50) is performed at each of predetermined spots to fix the fibrous mat (30) to the resin molding (20);
wherein a weld portion (40) of said fibrous mat (30)
is composed of a flat weld surface (41) being pressed by a flat pressing surface (51) of said ultrasonic horn (50), and a V-groove being bitten into the resin molding (20) by a sharp projecting thread (52) formed on the pressing surface (51) of said ultrasonic horn (50).

2. The fibrous mat fixing structure according to claim 1, wherein said weld portion (40) is formed by said flat weld surface (41) and V-grooves (42), said V-grooves being set in a crisscross configuration in said weld surface.

3. The fibrous mat fixing structure according to claim 1, wherein said weld portion (40) is formed by said flat weld surface (41) and V-grooves (42) extending radially from a center of said flat weld surface (41).

4. The fibrous mat fixing structure according to claim 1, wherein said weld portion (40) is formed by said flat weld surface (41) and V-grooves (42) extending so as to form a lattice pattern.

5. The fibrous mat fixing structure according to claim 1, wherein said weld portion (40) comprises a V-groove (42) formed along the peripheral edge of said flat weld surface (41) so as to have a length corresponding to part or the whole of the peripheral edge.

6. The fibrous mat fixing structure according to any one of claims 1 to 5, wherein the depth of the V-groove (42) in said weld portion (40) is set to a value equal to or smaller than 1 mm.

7. A sound absorbing component for a vehicle, wherein a fibrous mat (30) is integrally attached to a panel-facing surface of a resin molding (20) by using the fibrous mat fixing structure according to any of claims 1 to 6.

## Patentansprüche

1. Struktur zur Befestigung einer faserigen Matte, in der eine faserige Matte (30) an einer einer Platte zugewandten Oberfläche eines Harzformkörpers (20) befestigt wird, wobei der Harzformkörper (20) an einer Innenseite einer Formplatte eines Fahrzeuges angebracht ist, und wobei an jeder Stelle von vorbestimmten Stellen eine Schweißung mit einem Ultraschallhorn (50) durchgeführt wird, um die faserige Matte (30) am Harzformkörper (20) zu befestigen;
wobei ein Schweißbereich (40) der besagten faserigen Matte (30)
aus einer flachen Schweißnahtoberfläche (41), auf welche durch eine flache Pressfläche (51) des besagten Ultraschallhorns (50) Druck ausgeübt wird, und aus einer V-Nut besteht, wobei die V-Nut mittels einer scharfen, vorstehenden Faser (52), welche auf der Pressfläche (51) des besagten Ultraschallhorns (50) ausgebildet ist, in den Harzformkörper (20) hineingeschnitten wird.

2. Struktur zur Befestigung einer faserigen Matte nach Anspruch 1, wobei der besagte Schweißbereich (40) durch die besagte flache Nahtoberfläche (41) und durch V-Nuten (42) ausgebildet ist, wobei die besagten V-Nuten in einer sich durchkreuzenden Ausgestaltung in die besagte Nahtoberfläche hineingeschnitten sind.

3. Struktur zur Befestigung einer faserigen Matte nach Anspruch 1, wobei der besagte Schweißbereich (40) durch die besagte flache Nahtoberfläche (41) und durch V-Nuten (42) ausgebildet ist, wobei die V-Nuten (42) von einer Mitte der besagten flachen Nahtoberfläche (41) ausgehend radial verlaufen.

4. Struktur zur Befestigung einer faserigen Matte nach Anspruch 1, wobei der besagte Schweißbereich (40) durch die besagte flache Nahtoberfläche (41) und durch V-Nuten (42) ausgebildet ist, wobei die V-Nuten (42) derart verlaufen, dass sie eine Gitterstruktur ausbilden.

5. Struktur zur Befestigung einer faserigen Matte nach Anspruch 1, wobei der besagte Schweißbereich (40) eine V-Nut (42) aufweist, wobei die V-Nut (42) entlang des umlaufenden Randes der besagten flachen Nahtoberfläche (41) ausgebildet ist, so dass sie eine Länge, welche einem Teil oder dem Ganzen des umlaufenden Randes entspricht, aufweist.

6. Struktur zur Befestigung einer faserigen Matte nach einem der Ansprüche 1 bis 5, wobei die Tiefe, welche die V-Nut (42) im besagten Schweißbereich (40) aufweist, auf einen Wert kleiner als 1 mm oder gleich 1mm, eingestellt ist.

7. Schalldämpfendes Bauteil für ein Fahrzeug, wobei eine faserige Matte (30) mittels der Struktur zur Befestigung einer faserigen Matte nach einem der Ansprüche 1 bis 6 einstückig an einer einer Platte zugewandten Oberfläche eines Harzformkörpers (20) befestigt ist.

## Revendications

1. Structure de fixation de tapis fibreux, dans laquelle un tapis fibreux (30) est attaché à une surface de revêtement de panneau d'un moulage en résine (20), qui est installé sur un côté intérieur d'un panneau de moulage de véhicule, un soudage par cornet ultrasonique (50) étant réalisé au niveau de chacun parmi des endroits prédéterminés pour fixer le tapis fibreux (30) au moulage en résine (20) ;
dans laquelle une portion de soudure (40) dudit tapis fibreux (30) est composée d'une surface de soudure plate (41) étant pressée par une surface de pressage à plat (51) dudit cornet ultrasonique (50), et un joint en V étant enlevé dans le moulage en résine (20) par un filetage effilé en projection (52), qui est formé sur la surface de pressage (51) dudit cornet ultrasonique (50).

2. Structure de fixation de tapis fibreux selon la revendication 1, dans laquelle ladite portion de soudure (40) est formée par ladite surface de soudure plate (41) et des joints en V (42), lesdits joints en V étant disposés dans ladite surface de soudure selon une configuration entrecroisée.

3. Structure de fixation de tapis fibreux selon la revendication 1, dans laquelle ladite portion de soudure (40) est formée par ladite surface de soudure plate (41) et des joints en V (42) en extension radiale depuis un centre de ladite surface de soudure plate (41).

4. Structure de fixation de tapis fibreux selon la revendication 1, dans laquelle ladite portion de soudure (40) est formée par ladite surface de soudure plate (41) et des joints en V (42) s'étendant de sorte qu'ils forment un motif de treillis.

5. Structure de fixation de tapis fibreux selon la revendication 1, dans laquelle ladite portion de soudure (40) comprend un joint en V (42), qui est formé le long du bord périphérique de ladite surface de soudure plate (41) de sorte qu'il possède une longueur correspondant à une partie ou à l'intégralité du bord périphérique.

6. Structure de fixation de tapis fibreux selon l'une quelconque des revendications 1 à 5, dans laquelle la profondeur du joint en V (42) dans ladite portion de soudure (40) est établie ou réglée à une valeur égale ou inférieure à 1 millimètre.

7. Un composant insonorisant pour un véhicule, dans lequel un tapis fibreux est intégralement attaché à une surface de revêtement de panneau d'un moulage en résine (20) en utilisant la structure de fixation de tapis fibreux selon l'une quelconque des revendications 1 à 6.
